# EUROPEAN PATENT APPLICATION

(11) **EP 1 883 187 A1**
(43) Date of publication of application: **30.01.2008**
(21) Application number: 06713370.2
(22) Date of filing: 09.02.2006
(51) Int. Cl.: H04L 12/56

(54) **PACKET PROCESSING DEVICE, COMMUNICATION SYSTEM, PACKET PROCESSING METHOD, AND PROGRAM EXECUTING THE METHOD**

(30) Priority: 17.05.2005 JP 2005143739
(71) Applicant: MATSUSHITA ELECTRIC INDUSTRIAL CO., LTD., Osaka 571-8501 (JP)
(72) Inventor: OKA, Yoshihiro Matsushita Electric Industrial Co. Ltd, 2-1-61, Shiromi, Chuo-ku Osaka 540-6207 (JP); FUJITA, Yoshikatsu Matsushita Electric Industrial Co. Ltd, 2-1-61, Shiromi, Chuo-ku Osaka 540-6207 (JP)
(74) Representative: Grünecker, Kinkeldey, Stockmair & Schwanhäusser Anwaltssozietät
(86) International application number: PCT/JP2006/302227
(87) International publication number: WO 2006/123456

(57) **Abstract**

For a system that comprises an information processing apparatus that repetitively transmits a packet and a server apparatus that receives the packet, a packet processing apparatus that can reduce a packet processing load imposed on the server apparatus, a communication system and a packet processing method are disclosed. This packet processing apparatus includes: a packet determination unit for determining whether a packet received by a receiver is a repetitive packet that has been repetitively transmitted by an information processing apparatus to a server apparatus; a transmission determination unit for determining whether the packet that is determined to be a repetitive packet should be transmitted; and a transmitter for transmitting a packet that is determined not to be a repetitive packet and a packet that is determined to be transmitted, and for not transmitting a packet that is determined, by the transmission determination unit, is not to be transmitted.

## Description

### <Technical Field>

The present invention relates to a packet processing apparatus that performs a process related to a packet, a communication system that includes this apparatus, and a packet processing method and a program that executes the method.

### <Background Art>

A communication system that includes an information processing apparatus, a communication processing apparatus and a server apparatus,
wherein the information processing apparatus, such as a home Personal Computer (PC) or a home appliance, repetitively transmits a predetermined packet to the server apparatus via the communication apparatus is disclosed, for example, in International Publication No. 2004/030292. Here, the communication processing apparatus is, for example, a router, etc., that has a Network Address Translation (hereinafter written as a NAT) function. One purpose of the information processing apparatus repetitively transmitting a packet to the server apparatus is the keeping of the port of the communication processing apparatus, and the other purpose is the performance of a predetermined process performed by the server apparatus.

First, keeping of the port of a communication processing apparatus will be described. When a packet is to be transmitted by a Local Area Network (hereinafter written as a LAN) side to a Wide Area Network (hereinafter written as a WAN) side, a communication processing apparatus, such as a router that has a NAT function, translates the LAN private Internet Protocol (hereinafter written as IP) address and port number to the WAN global IP address and port number.

Further, in a case for the repetitive reception of a packet from the WAN, a filtering process according to a predetermined reception filter rule is performed, and inverse address translation is performed, so that the packet is transmitted to the information processing apparatus. Here, for the port to which a packet is transmitted by the LAN of the NAT, there are reception filter rules used to determine the probability of receiving a packet from the WAN: an address sensitive filter, according to which a packet is received only from the address to which the packet has been transmitted through the pertinent port; a port sensitive filter, according to which a packet is received only from a port to which the packet has been transmitted through the pertinent port; and no filter, according to which no filter is present.

A period for performing such an address translation is designated for the communication processing apparatus. Specifically, when a predetermined period has elapsed from the last specific address translation performed between the WAN and the LAN, the address translation will not be performed for a packet received from the WAN. In other words, a new address translation will be performed for a packet received from the LAN. That is, a packet transmitted by the WAN is not received by the information processing apparatus, and the information processing apparatus can not be accessed by an external apparatus, such as a mobile phone, via the server apparatus.

Assume that this predetermined period of time is called a port keeping period. Therefore, a packet is repetitively transmitted to maintain the port of the communication apparatus, to ensure that the information processing apparatus can be accessed via the server apparatus by an external apparatus, such as a mobile phone, i.e., so that a packet received from the WAN can be transmitted via the communication processing apparatus to the information processing apparatus.

Next, an explanation will now be given for a predetermined process performed by the server for a packet that is repetitively transmitted. The predetermined process performed by the server is, for example, a process to ascertain whether the IP address, on the WAN side, of the communication processing apparatus has been changed. Depending on the setup of a connection provider, etc., the IP address, on the WAN side, of the communication processing apparatus may be changed every predetermined period. In a case wherein the server apparatus does not know the change in the IP address, the server apparatus can not transmit information to the information processing apparatus via the communication processing apparatus, and as a result, an external apparatus, such as a mobile phone, can not access the information processing apparatus via the server apparatus. Therefore, a repetitive packet transmission is performed, so that the server can perform a process to ascertain the change in the address of the communication processing apparatus.

However, according to the conventional arrangement, a problem may occur in that, in a case wherein the server apparatus accepts a packet that is repetitively and frequently transmitted, accordingly, the processing load imposed on the server apparatus is increased. Especially, in a case wherein a short port keeping period is provided for a communication processing apparatus having a NAT function, to which the information processing apparatus is connected, this problem would be noticeable. Furthermore, generally, since a plurality of information processing apparatuses repetitively transmit packets to one server apparatus, accordingly, the processing load imposed on the server apparatus would be increased.

### <Disclosure of the Invention>

The present invention provides, for a system that comprises an information processing apparatus that repetitively transmits a packet and a server apparatus that receives the packet, a packet processing apparatus that can reduce a packet processing load imposed on the server apparatus, a communication system that includes this packet processing apparatus, and a packet processing method.

A packet processing apparatus according to the present invention comprises:
a receiver for receiving a packet;
a packet determination unit for determining whether a packet received by the receiver is a repetitive packet that has been a packet repetitively transmitted by an information processing apparatus to a server apparatus;
a transmission determination unit for determining whether the packet that is determined by the packet determination unit to be a repetitive packet should be transmitted; and
a transmitter for transmitting a packet determined by the packet determination unit not to be a repetitive packet, and a packet that is determined, by the transmission determination unit, is to be transmitted, and for not transmitting a packet that is determined, by the transmission determination unit, is not to be transmitted. Therefore, among repetitive packets transmitted by the information processing apparatus, part of the repetitive packets can be prevented from reaching the server apparatus, and the processing load imposed on the server apparatus can be reduced.

Further, for the packet processing apparatus of the invention, the transmission determination unit may determine that, of repetitive packets, a predetermined proportion of repetitive packets are not to be transmitted. According to this arrangement, the predetermined proportion of repetitive packets do not reach the server apparatus, so that the proportion of the repetitive packets that reach the server apparatus can be stably reduced, and the processing load imposed on the server apparatus can be actually reduced. On the other hand, since repetitive packets other than the predetermined proportion of repetitive packets can be transmitted to the server apparatus, the server apparatus can also perform a process, etc., using the repetitive packets.

In addition, for the packet processing apparatus of the invention, the transmission determination unit may determine that, of repetitive packets, repetitive packets that satisfy a predetermined condition are not to be transmitted. According to this arrangement, repetitive packets that satisfy a predetermined condition can be prevented from reaching the server apparatus. It should be noted that, when a predetermined condition is appropriately designated, it is also possible that repetitive packets that should be received by the server apparatus are to be transmitted to the server apparatus, and repetitive packets that need not be received by the server apparatus are not to be transmitted to the server apparatus.

Moreover, for the packet processing apparatus of the invention, a repetitive packet may include:
first address information that is information related to an address of a transmission source designated a header of the repetitive packet; and
second address information that is information related to an address designated as a payload for the repetitive packet by the information processing apparatus,
wherein, in a case wherein the first address information and the second address information included in the repetitive packet match each other, the transmission determination unit may determine that the repetitive packet is not to be transmitted to the server apparatus.

Also, the first address information included in the repetitive packet may be designated by a transmission processing apparatus, which includes an address translation function and via which the repetitive packet has been transmitted. According to this arrangement, for a case wherein the address of a communication processing apparatus held by the information processing apparatus is changed, the repetitive packet can be transmitted to the server apparatus. In an other case, transmission of the repetitive packet to the server apparatus can be inhibited.

A communication system according to the invention comprises:
the packet processing apparatus described above; and
a switching device for extracting, from packets exchanged along a communication line, only a packet transmitted to a server apparatus,
wherein a receiver of the packet processing apparatus receives the packet extracted by the switching device. As a result, compared with a case
wherein the packet processing apparatus processes all the packets, the processing load imposed on the packet processing apparatus can be reduced.

### <Brief Description of the Drawings>

Fig. 1 is a diagram illustrating the configuration of a communication system that includes a packet processing apparatus according to a first embodiment of the present invention.
Fig. 2 is a flowchart showing the operation of the packet processing apparatus according to this embodiment.
Fig. 3 is a diagram illustrating an example structure for a repetitive packet handled by the packet processing apparatus according to this embodiment.
Fig. 4 is a diagram illustrating example reception count information for the packet processing apparatus according to this embodiment.
Fig. 5 is a diagram illustrating another example structure for a repetitive packet handled by the packet processing apparatus according to this embodiment.
Fig. 6 is a diagram illustrating an additional example structure for a repetitive packet handled by the packet processing apparatus according to this embodiment.
Fig. 7 is a diagram illustrating the configuration of a communication system that includes a packet processing apparatus according to a second embodiment of the present invention.

### <Description of Reference Numerals and Signs>

1: information processing apparatus
2: communication processing apparatus (including the function of a transmission processing apparatus)
3: packet processing apparatus
4: server apparatus
5: switching device
31: receiver
32: packet determination unit
33: transmission determination unit
34: transmitter

### <Best Modes for Carrying Out the Invention>

The embodiments of the present invention will now be described while referring to drawings. In the following embodiments, since components and steps for which the same reference numerals are provided are identical to each other, or correspond to each other, the explanation for them may not be repeated.

### (First Embodiment)

A communication system that includes a packet processing apparatus according to a first embodiment of the present invention will be described while referring to the drawings.

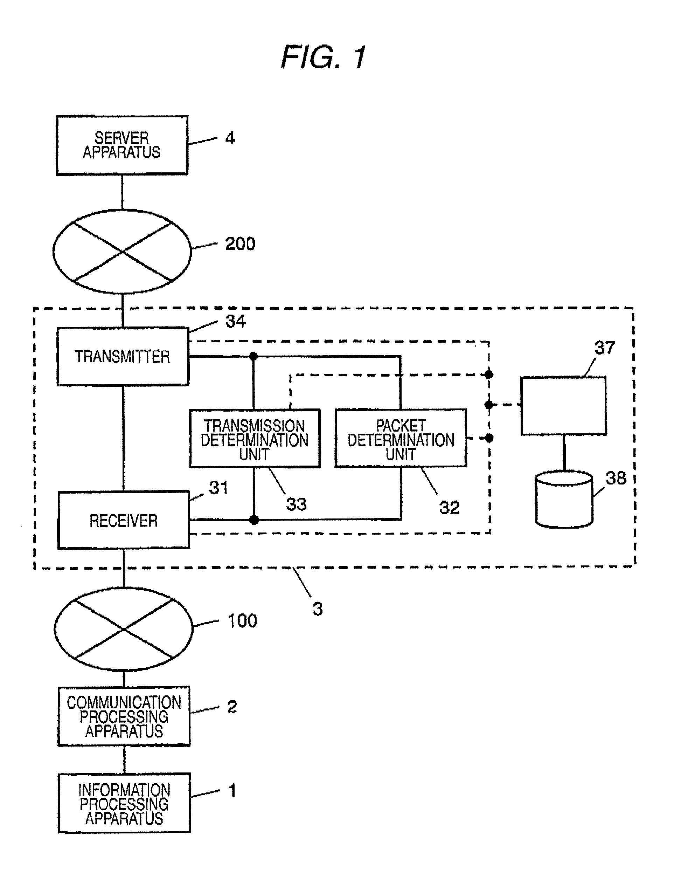

Fig. 1 is a diagram illustrating the configuration of the communication system that includes the packet processing apparatus of this embodiment. In Fig. 1, the communication system comprises an information processing apparatus 1, a communication processing apparatus 2, a packet processing apparatus 3 and a sever apparatus 4. It should be noted that the communication processing apparatus 2, the packet processing apparatus 3 and the server apparatus 4 are connected by wire or wireless communication networks 100 and 200. The communication networks 100 and 200 are, for example, the Internet, the Intranet, or a public telephone network. The packet processing apparatus 3 is located as a relay node on the communication networks 100 and 200 between the communication processing apparatus 2 and the server apparatus 4.

The information processing apparatus 1 is, for example, a computer, a microwave, a telephone, a printer, a facsimile machine, a refrigerator, a washing machine, an air conditioner, a television, a video recorder, a set top box, etc. The information processing apparatus 1 repetitively transmits a repetitive packet. Here, the repetitive packet is a packet repetitively transmitted by the information processing apparatus 1. "Repetitively transmit" defines the repeating of the transmission many times, and the transmission cycle may be fixed, such as every five minutes, or may not be fixed, e.g., changed between four minutes to twenty minutes.

It should be noted that the cycle for transmitting a repetitive packet is generally set shorter than a port keeping period for the communication processing apparatus 2. The payload of the repetitive packet may include specific information, or may not include any information. The repetitive packet is, for example, a packet for a User Datagram Protocol (hereinafter written as a UDP), or for a Transmission Control Protocol (hereinafter written as a TCP).

The communication processing apparatus 2 performs a process related to communication between the information processing apparatus 1 and the server apparatus 4, etc. The communication processing apparatus 2 may have the function of a transmission processing apparatus that includes a NAT function for performing the address translation, may be an apparatus that has a Firewall function for packet filtering, or may be an apparatus that has both functions. Here, packet filtering is the selection of a received packet based on a reception filter rule. The reception filter rules are, for example, the address sensitive filter, the port sensitive filter and the no filter, as previously described. It is assumed that, in a case wherein the communication processing apparatus 2 has an apparatus that has only a firewall function, as well as in the above explanation, the port keeping period is designated for the communication processing apparatus 2.

The packet processing apparatus 3 includes a receiver 31, a packet determination unit 32, a transmission determination unit 33, a transmitter 34, a program execution unit 37 and a recording medium 38. It should be noted that, in this embodiment, an explanation will be given only for a case wherein the packet processing apparatus 3 performs a process for a packet transmitted by the communication line 100 side to the communication line 200 side. However, the packet processing apparatus 3 may perform a process for transmitting to the communication line 100 side a packet transmitted by the communication line 200 side. The program execution unit 37 and the recording medium 38 will be described later.

The receiver 31 receives a packet transmitted by the communication line 100 side. This packet is a packet, for example, that is transmitted by the information processing apparatus 1 via the communication processing apparatus 2. It should be noted that the receiver 31 may include a reception device, such as a modem or a network card, that performs reception, or may not include such a device. In a case wherein the receiver 31 does not include a reception device, a reception device (not shown) is present between the receiver 31 and the communication line 100. Further, the receiver 31 may be provided using hardware, or using software, such as a driver that drives a reception device.

The packet determination unit 32 determines whether a packet received by the receiver 31 is a repetitive packet that is a packet repetitively transmitted by the information processing apparatus 1 to the server apparatus 4. For example, in a case wherein a repetitive packet includes information indicating the pertinent packet is a repetitive packet, the packet determination unit 32 may employ this information to determine whether a packet is a repetitive packet. Further, in a case wherein information related to the address of a repetitive packet transmission source, or information related to the address of a transmission destination, is designated, the packet determination unit 32 may employ the address, etc., included in the header of the packet to determine whether a packet is a repetitive packet.

Here, information related to the address may, for example, be an IP address or a port number, or may be both of them. Specifically, in a case
wherein the port number for a repetitive packet transmission destination is designated, the packet determination unit 32 may determine whether the port number of the packet transmission destination is the port number of the repetitive packet transmission destination, and may employ the determination result to determine whether the packet is a repetitive packet, Furthermore, for example, in a case wherein the form of a repetitive packet is determined, the packet determination unit 32 may employ the packet form to determine whether a packet is a repetitive packet.

A packet form is, for example, a packet size or a packet protocol, such as the UDP or the TCP. In addition, the packet determination unit 32 may employ them together for a determination. For example, in a case wherein the protocol is for a repetitive packet, the port number of a transmission destination and the size are designated, and the packet determination unit 32 may determine that a packet that satisfies all of these conditions is a repetitive packet. Moreover, of course, the determination method employed by the packet determination unit 32 is not limited to these.

Also, the packet determination unit 32 may determine that a packet is a repetitive packet, may determine that a packet is not a repetitive packet, or may determine both. So long as, based on the determination results obtained by the packet determination unit 32, the packet received by the receiver 31 can be identified as either a repetitive packet or not, any determination results obtained by the packet determination unit 32 can be employed.

The transmission determination unit 33 determines whether a packet determined to be a repetitive packet by the packet determination unit 32 should be transmitted. Specifically, the determination may be performed as follows. It should be noted that the determination method is not limited to the one described below. Further, the transmission determination method 33 may determine that a repetitive packet is to be transmitted to the server apparatus 4 or may determine that a repetitive packet is not to be transmitted to the server apparatus 4, or may determine both are true. So long as whether or not a repetitive packet should be transmitted can be identified based on the determination results obtained by the transmission determination unit 33, any determination results obtained by the transmission determination unit 33 may be employed.
(1) For example, the transmission determination unit 33 may determine that, of repetitive packets, a predetermined proportion of repetitive packets are not to be transmitted. Specifically, the transmission determination unit 33, or another component included in the packet processing apparatus 3, counts the number of information sets related to the address of the transmission source of a repetitive packet, the number of information sets related to the address of the transmission destination and the number of reception times for the repetitive packet. And in a case wherein the reception count is a predetermined value, e.g., in a case wherein the first digit of the reception count is "1", it may be determined that a repetitive packet should be transmitted, or in the other case, it may be determined that a repetitive packet is not to be transmitted.
(2) Further, a random number generator (not shown) generates one of values 0 to 9 each time a repetitive packet is received, and in a case wherein a value generated by the random number generator is a predetermined value, e.g., in a case wherein a value generated by the random number generator is "1", the transmission determination unit 33 may determine a repetitive packet is to be transmitted, or in the other case, may determine that a repetitive packet is not to be transmitted.
(3) The transmission determination unit 33 may determine that, of the repetitive packets, a repetitive packet that satisfies a predetermined condition is not to be transmitted. Specifically, in the information processing apparatus 1, a flag indicating transmission is not required may be designated for part of the repetitive packets, and the transmission determination unit 33 may employ the flag included in a repetitive packet to determine whether transmission is to be performed. For example, in a case wherein a "1" is set for a flag indicating transmission is not required, the transmission determination unit 33 may determine transmission is not to be performed, or in a case wherein a "0" is set for the flag, may determine transmission is to be performed.

In addition, in the information processing apparatus 1, a count value consonant with the number of times of transmission of a repetitive packet is set in the repetitive packet, and in a case wherein the count value included in the repetitive packet is a predetermined value, e.g., in a case wherein the first digit of the count value is "1", the transmission determination unit 33 may determine the repetitive packet is to be transmitted. Further, in a case wherein the communication processing apparatus 2 includes the function of a transmission processing apparatus that has an address translation function (NAT function), the address and the port number of the repetitive packet transmission source are the address and the port number of the communication processing apparatus 2 on the communication line 100 side.

Furthermore, assume that the information processing apparatus 1 designates, as the payload for a repetitive packet, information related to the address of the communication processing apparatus 2 on the communication line 100 side, and transmits the repetitive packet. In such a case, the repetitive packet received by the receiver 31 includes: first address information, which is information related to an address designated by the communication processing apparatus 2 via which the repetitive packet has been transmitted and which has an address translation function; and second address information, which is information related to an address designated by the information processing apparatus 1. Specifically, the first address information is set in the header of the repetitive packet, and the second address information is set in the payload of the repetitive packet.

It should be noted that, as previously described, the address information may, for example, be an IP address or a port address, or may be both of them. In a case wherein the first address information and the second address information included in the repetitive packet do not match, the transmission determination unit 33 may determine that the repetitive packet should be transmitted to the server apparatus 4, or in a case wherein the address information matches, may determine the repetitive packet is not to be transmitted.

In a case wherein the first address information and the second address information do not match, it is assumed that information, held by the information processing apparatus 1, that is related to the address of the communication processing apparatus 2 on the communication line 100 side is different from information related to the actual address. Therefore, when the repetitive packet is transmitted to the server apparatus 4, the server apparatus 4 can detect the difference, and can perform a process, relative to the information processing apparatus 1, for changing information that is held by the information processing apparatus 1 and is related to the address of the communication processing apparatus 2 on the communication line 100 side.

The transmitter 34 transmits a packet that is determined by the packet determination unit 32 not to be a repetitive packet. Further, the transmitter 34 transmits a packet that is determined to be a repetitive packet by the packet determination unit 32 and that is determined, by the transmission determination unit 33, is to be transmitted. In addition, the transmitter 34 does not transmit a packet that is determined by the packet determination unit 32 to be a repetitive packet and that is determined, by the transmission determination unit 33, is not to be transmitted.

In a case wherein the transmitter 34 transmits a packet, a packet received by the receiver 31 is transmitted unchanged, without the rewriting of a header, etc. And as a result, the transmitter 34 simply performs the transmission of a packet in the above described manner. Therefore, of the packets received by the receiver 31, a packet that is determined, by the transmission determination unit 33, is not to be transmitted may not be transferred to the transmitter 34. As a result, packet transmission is also not performed.

Moreover, the transmitter 34 may include or may not include a transmission device, such as a modem or a network card, that performs a transmission. In a case wherein the transmitter 34 does not include a transmission device, a transmission device (not shown) is present between the transmitter 34 and the communication line 200. Further, the transmitter 34 may be provided using hardware, or may be provided using software, such as a driver that drives a transmission device.

The server apparatus 4 receives a packet transmitted by the information processing apparatus 1, etc. Upon receiving a packet transmitted by the information processing apparatus 1, the server apparatus 4 may perform a predetermined process for a repetitive packet. The predetermined process is, for example, the following process. The server apparatus 4 determines whether information registered in advance related to an address matches information related to the address of the transmission source of the received repetitive packet.

And in a case wherein the information does not match, the information held by the server apparatus 4 related to the address may be changed based on information related to the address of the repetitive packet transmission source, or an instruction may be issued to the information processing apparatus 1 to permit the server apparatus 4 to perform a process for changing information related to the address; or a packet that includes, in a payload, information related to the address of a repetitive packet transmission source may be transmitted to the information processing apparatus 1. As described above, an arbitrary process may be performed by the server apparatus 4.

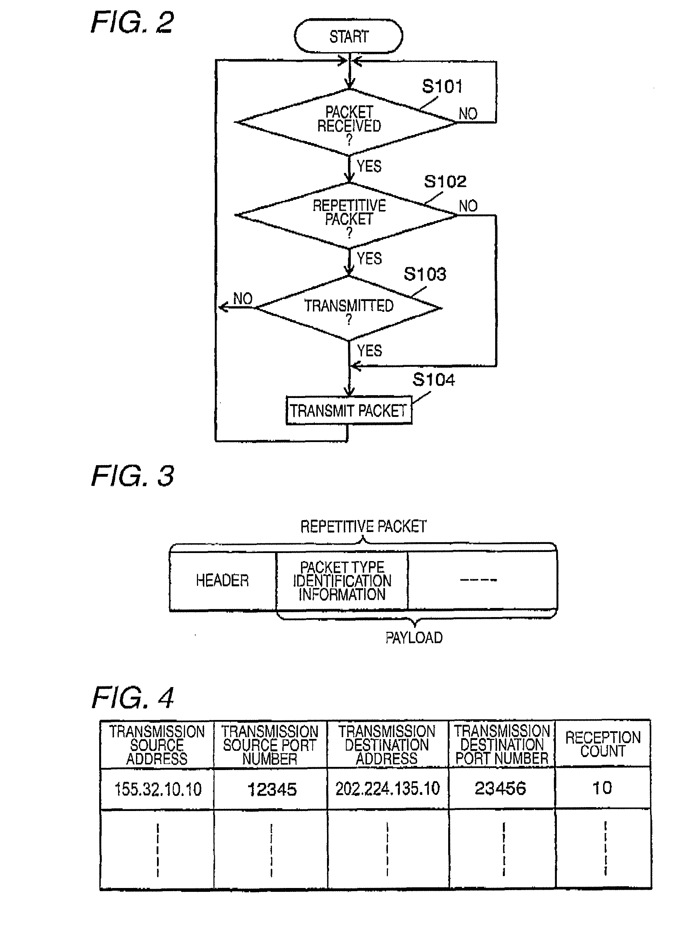

The operation of the packet processing apparatus 3 in this embodiment will now be described by employing the flowchart in Fig. 2. Fig. 2 is a flowchart showing the operation of the packet processing apparatus of this embodiment. The receiver 31 determines whether a packet is received (step S101). And in a case wherein a packet is received (Y at step S101), program control advances to step S102, or in the other case (N at step S101), the process at step S101 is repeated until a packet is received.

The packet determination unit 32 determines whether a packet received by the receiver 31 is a repetitive packet (step S102). And in a case wherein the packet is a repetitive packet (Y at step S102), program control advances to step S103, and in the other case (N at step S102), program control advances to step S104. The transmission determination unit 33 determines whether the repetitive packet should be transmitted (step S103).

Further, in a case wherein the transmission should be performed (Y at step S103), program control advances to step S104, or in the other case (N at step S103), program control returns to step S101. The transmitter 34 transmits a packet that is not a repetitive packet, or a repetitive packet that is determined, by the transmission determination unit 33, is to be transmitted (step S104). And program control returns to step S101. It should be noted that the processing in the flowchart in Fig. 2 is terminated by turning off the power, or by a processing end interrupt.

The operation of the packet processing apparatus 3 of this embodiment will now be described by employing specific examples. In the specific examples, assume that the packet processing apparatus 3 is a so-called router. Further, suppose that the addresses of the individual apparatuses are as follows.

The information processing apparatus 1: 192.168.0.11

The communication processing apparatus 2 (information processing apparatus 1 side): 192.168.0.1

The communication processing apparatus 2 (communication line 100 side): 155.32.10.10

The packet processing apparatus 3 (communication line 100 side): 202.132.10.6

The packet processing apparatus 3 (communication line 200 side): 202.198.105.10

The server apparatus 4: 202.224.135.10

In a specific example 1 below, assume that, for determination of a repetitive packet, the packet determination unit 32 employs packet type identification information, which is information used to identify the type of packet included in a repetitive packet. Further, the transmission determination unit 33 includes reception count information, which is information for correlating, with the first digit of the count for reception of the repetitive packet, the address and the port number of the transmission source of a repetitive packet and the address of the transmission destination. In a case wherein the first digit of the reception count is "1", it is determined that a repetitive packet is to be transmitted, and in the other case, it is determined that a repetitive packet is not to be transmitted.

Suppose that a repetitive packet having the structure shown in Fig. 3 is transmitted by the information processing apparatus 1. Fig. 3 is a diagram showing an example structure for a repetitive packet processed by the packet processing apparatus of the embodiment. Here, assume that packet type identification information included in a repetitive packet includes a notification that the packet type is a repetitive packet. The communication processing apparatus 2 performs address translation for this repetitive packet, and the receiver 31 of the packet processing apparatus 3 receives the resultant packet (step S101). The packet determination unit 32 examines the packet type identification information included in the payload of the repetitive packet, and determines the packet is a repetitive packet because the packet type identification information indicates that the packet type is a repetitive packet (step S102).

Assume that the reception count information held by the transmission determination unit 33 is as shown in Fig. 4. Fig. 4 is a diagram showing example reception count information obtained by the packet processing apparatus of this embodiment. The transmission determination unit 33 obtains, from the header of a repetitive packet, the address and the port number of a transmission source and the address and the port number of a transmission destination, and increments the correlated reception count "10" by one to set "11". Further, since the reception count obtained by incrementing is "11", the transmission determination unit 33 determines that the repetitive packet is to be transmitted, and transfers this notification to the transmitter 34 (step S103).

The transmitter 34 transmits the repetitive packet received by the receiver 31 (step S104). As a result, this packet is received by the server apparatus 4. Thereafter, as previously described, an arbitrary process is performed by the server apparatus 4. On the other hand, assume that "12" is the reception count that is correlated with the repetitive packet received by the receiver 31. Then, the transmission determination unit 33 determines that the repetitive packet is not to be transmitted, and transfers this notification to the transmitter 34 (step S103). As a result, the repetitive packet received by the receiver 31 is not transmitted. Furthermore, in a case wherein the receiver 31 receives a packet that is not a repetitive packet (step S101), the packet determination unit 32 determines that the packet is not a repetitive packet (step S102), and the packet is transmitted by the transmitter 34 (step S104).

In a specific example 2 below, also suppose that, for determination of a repetitive packet, the packet determination unit 32 employs packet type identification information, which is information for identifying the type of packet included in a repetitive packet. It should be noted that, in the specific example 2, the communication processing apparatus 2 includes an address translation function. Further, assume that the information processing apparatus 1 includes, in the payload of a repetitive packet, the address and the port number, held by the information processing apparatus 1, of the communication processing apparatus 2 on the communication line 100 side.

In addition, the transmission determination unit 33 compares, with the address and the port number of a transmission source that are designated to the header of the repetitive packet by the communication processing apparatus 2. the address and the port number that are added to the payload of the repetitive packet by the information processing apparatus 1. In a case wherein the two are matched, it is determined that the repetitive packet is not to be transmitted, and in a case wherein the two do not match, it is determined that the repetitive packet is to be transmitted.

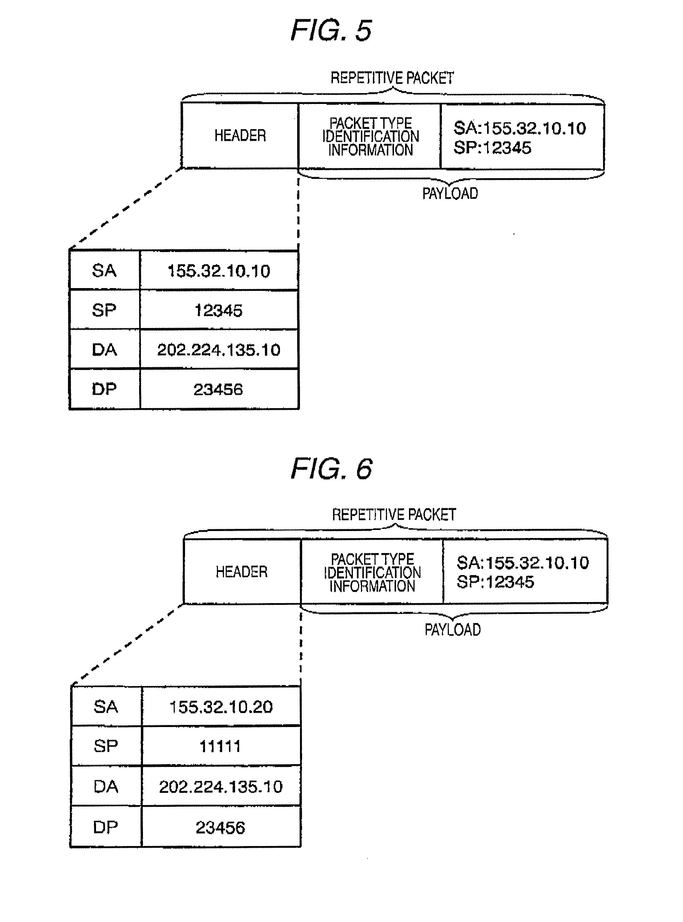

Suppose that address "155.32.10.10" and port number "12345", which are held by the information processing apparatus 1 for the communication processing apparatus 2 on the communication line 100 side, match the actual address and the actual port number of the communication processing apparatus 2 on the communication line 100 side. Then, a repetitive packet, which is transmitted by the information processing apparatus 1 and for which the address translation is performed by the communication processing apparatus 2, is as shown in Fig. 5. Fig. 5 is a diagram showing another example structure for a repetitive packet processed by the packet processing apparatus of this embodiment.

In Fig. 5, "SA" represents a Source Address that is a transmission source address, "SP" represents a Source Port that is a transmission source port number, "DA" represents a Destination Address that is a transmission destination address, "DP" represents a Destination Port that is a transmission destination port number. A repetitive packet is received by the receiver 31 of the packet processing apparatus 3 (step S101). Based on packet type identification information included in a repetitive packet, the packet determination unit 32 determines that the received packet is a repetitive packet (step S102).

The transmission determination unit 33 reads, from the header of the repetitive packet, transmission source address "155.32.10.10" and transmission source port number "12345", which are set by the communication processing apparatus 2. Further, the transmission determination unit 33 reads, from the payload of the repetitive packet, transmission source address "155.32.10.10" and transmission source port number "12345", which are set by the information processing apparatus 1. And since the two are found to match, as the result of a comparison, the transmission determination unit 33 determines that the repetitive packet is not to be transmitted (step S103). As a result, the repetitive packet is not transmitted to the server apparatus 4, and is abandoned by the packet processing apparatus 3.

On the other hand, suppose that a connection provider, etc., that provides the address of the communication processing apparatus 2 on the communication line 100 side has changed, to "155.32.10.20", the address of the communication processing apparatus 2 on the communication line 100 side. When a repetitive packet is transmitted while the address, held by the information processing apparatus 1, of the communication processing apparatus 2 on the communication line 100 side has not yet been updated, the repetitive packet as shown in Fig. 6 is received by the receiver 31. Fig. 6 is a diagram showing an additional example structure for a repetitive packet processed by the packet processing apparatus of this embodiment.

The packet determination unit 32 determines that the packet is a repetitive packet (step S102). As well as in the above description, the transmission determination unit 33 reads, from the header of the repetitive packet, transmission source address "155.32.10.20" and transmission source port number "11111", which are set by the communication processing apparatus 2. Furthermore, the transmission determination unit 33 reads, from the payload of the repetitive packet, transmission source address "155.32.10.10" and transmission source port number "12345", which are set by the information processing apparatus 1.

In this case, since the two do not match, the transmission determination unit 33 determines that the repetitive packet is to be transmitted, and transfers the notification to the transmitter 34 (step S103). Then, the transmitter 34 transmits the repetitive packet received by the receiver 31 (step S104). This repetitive packet is received by the server apparatus 4 via the communication line 200. The process following the reception is of no concern.

For example, the server apparatus 4 transmits, to the information processing apparatus 1, the address and the port number of the communication processing apparatus 2, on the communication line 100 side, that have been changed, and also transmits an instruction to perform an address registration process using the address that has been changed. As a result, the information processing apparatus 1 may perform a process for registering, with the server apparatus 4, the address and the port number that have been changed, and may perform a process for changing, to the new ones, the address and the port number that are held by the information processing apparatus 1 for the communication processing apparatus 2 on the communication line 100 side.

It should be noted that, in the specific example 2, an explanation has been given for a case wherein the communication processing apparatus 2 has the address translation function. However, the communication processing apparatus 2 may not include the address translation function. For example, in a case wherein the first address information, which is information related to the transmission source address designated to the header of the repetitive packet, does not match the second address information designated to the payload of the repetitive packet, the transmission determination unit 33 of the packet processing apparatus 3 may determine that the repetitive packet is to be transmitted to the server apparatus 4, and in the case of the information matches, may determine that the repetitive packet is not to be transmitted to the server apparatus 4.

Here, the first address information included in the header of the repetitive packet may be information designated, for example, by the communication device, etc., of the information processing apparatus 1, and the second address information included in payload of the repetitive packet may be information designated, for example, by the application, etc., of the information processing apparatus 1. In this manner, for example, the application, etc., that is present in the user space of the information processing apparatus 1 need not directly refer to the address and the port number present in the kernel space of the information processing apparatus 1 to determine whether the address, etc., of the information processing apparatus 1 designated by a connection provider, etc., has been changed.

As described above, according to this embodiment, in a case wherein the received packets are repetitive packets, instead of transmitting all of the repetitive packets to the server apparatus 4, the packet processing apparatus 3 does not transmit one part of the repetitive packets, so that the number of repetitive packets received by the server apparatus 4 can be reduced. As a result, the processing load imposed on the server apparatus 4 can be reduced. Especially in a case wherein the server apparatus 4 performs a heavy load process, such as a comparison made to determine whether the address of a repetitive packet transmission source matches the address registered at the server apparatus 4, the effect produced by the reduction in the processing load is remarkable.

Furthermore, as in the specific example 1, since as a predetermined proportion of repetitive packets reach the server apparatus 4, e.g., as one of ten repetitive packets reaches the server apparatus 4, the server apparatus 4 can notify the information processing apparatus 1, for example, that the address and the port number of the communication processing apparatus 2 on the communication line 100 side have been changed. In addition, as in the specific example 2, when the addresses, etc., are compared to determine whether transmission of a repetitive packet is enabled, a repetitive packet, for which a process performed by the server apparatus 4 is required, can be transmitted to the server apparatus 4, and the processing load imposed on the server apparatus 4 can be reduced.

Moreover, since a repetitive packet transmitted by the information processing apparatus 1 is passed through the communication processing apparatus 2, the information processing apparatus transmits the repetitive packet at a shorter interval than the port keeping period of the communication processing apparatus 2, the information processing apparatus 1 can always receive, via the communication processing apparatus 2, a packet transmitted by the server apparatus 4.

### (Second Embodiment)

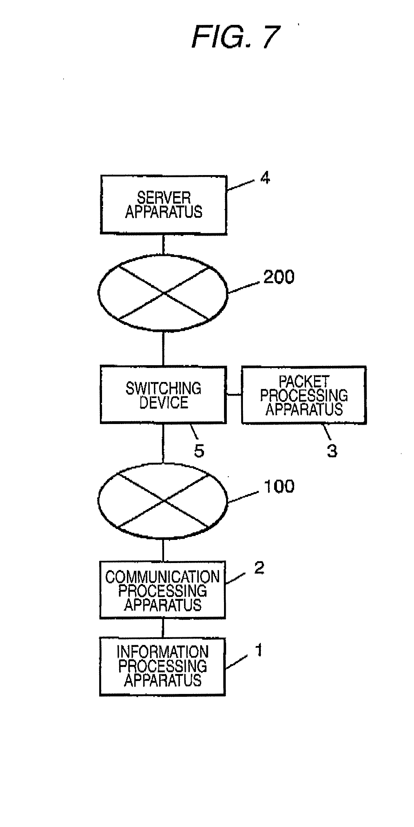

A communication system according to a second embodiment of the present invention comprises a switching device 5 and a packet processing apparatus 3, and the packet processing apparatus 3 determines whether or not transmission should be performed only for a packet that is determined, by the switching device 5, is to be transmitted to a server apparatus 4. Fig. 7 is a diagram illustrating the configuration of the communication system that includes the packet processing apparatus for the second embodiment of the present invention. Since the communication system of this embodiment is the same as that for the first embodiment, except that the switching device 5 is additionally provided, no explanation for this will be given.

The switching device 5 extracts, of the packets passed along a communication line 100, only a packet to be transmitted to the server apparatus 4. And the packet extracted by the switching device 5 is transferred to the packet processing apparatus 3 and is received by a receiver 31 of the packet processing apparatus 3. The switching device 5 is, for example, a so-called layer 3 switch, according to a network hierarchy, and the address of the server apparatus 4 is designated.

The address of the IP header of a packet that is passed via communication is examined, and in a case wherein the transmission destination address of the IP header matches the address of the server apparatus 4 designated for the switching device 5, the packet is transferred to the packet processing apparatus 3. In a case wherein the addresses do not match, the packet is passed unchanged. The switching device 5 is located, for example, between so-called routers via a communication network, such as the Internet.

It should be noted that the same process as in the first embodiment is performed for a packet transferred from the switching device 5 to the packet processing apparatus 3. And a packet that is a repetitive packet and that it is determined should not be transmitted is not transmitted, while other packets are transmitted by the packet processing apparatus 3 to a communication line 200. Since the operation of the packet processing apparatus 3 is performed in the same manner as in the first embodiment, no further explanation will be given.

As described above, according to the communication system of this embodiment, the switching device 5 is employed to extract only a packet to be transmitted to the server apparatus 4, and the packet processing apparatus 3 performs a process for this packet. Thus, the processing load imposed on the packet processing apparatus 3 can be reduced. Generally, since the processing load imposed on the switching device 5 is smaller than the processing load imposed on the packet processing apparatus 3, the overall processing load can be reduced.

Further, in the above individual embodiments, the packet processing apparatus 3 may be a so-called router that has an address, or may be a so-called bridge apparatus that does not have an address. Furthermore, in the individual embodiments, so long as the packet processing apparatus 3 is present as a relay node along a communication line between the communication processing apparatus 2 and the server apparatus 4, the location does not matter. For example, in a case wherein the packet processing apparatus 3 is present as a relay node near the information processing apparatus 1, the number of repetitive packets to be transmitted is simply reduced, so that all the traffic along the communication line can be reduced.

In such a case, for example, a plurality of packet processing apparatuses 3 may be arranged along the communication line for each area. On the other hand, the packet processing apparatus 3 may be present as a relay node near the server apparatus 4, and may be connected to the server apparatus 4. When the packet processing apparatus 3 is connected to the server apparatus 4, it means that all of the packets transmitted to the server apparatus 4 are passed through the packet processing apparatus 3. Therefore, in a case wherein the packet processing apparatus 3 is connected to the server apparatus 4, no packet is transmitted to the server apparatus 4 without being passed via the packet processing apparatus 3, and effectively, the processing load imposed on the server apparatus 4 can be reduced.

In addition, according to the above individual embodiments, in a case
wherein the information processing apparatus 1 includes the address, etc., of the communication processing apparatus 2 on the communication line 100 side, any method can be employed for the information processing apparatus 1 to obtain the address, etc. For example, the information processing apparatus 1 may receive an address, etc., transmitted by a predetermined server apparatus, or may employ the function, such as a universal plug and play (hereinafter written as a UPnP) function, to obtain the address, etc., from the communication processing apparatus 2. Furthermore, in the above individual embodiments, the information processing apparatus 1 may perform communication via two or more communication processing apparatuses.

Moreover, the communication protocol employed for the above individual embodiments may, for example, be the IP version 4 (hereinafter written as v4), or the IP version 6 (hereinafter written as v6). Also, in the above individual embodiments, the individual processes or the individual functions may be provided by a single apparatus or a single system through integrated processing, or by a plurality of apparatuses or a plurality of systems through distributed processing.

Further, in the above individual embodiments, the individual components may be provided using dedicated hardware, or components that can be obtained using software may be provided by performing a program. For example, the individual components can be provided when the software program recorded on the recording medium 38, such as a hard disk or a semiconductor memory, is read and executed by the program execution unit 37, such as a central processing unit (hereinafter written as a CPU) of a computer. It should be noted that the software that provides the packet processing apparatus for each embodiment is the following program.

That is, this program permits a computer to perform:
a reception step of receiving a packet;
a packet determination step of determining whether the packet received at the reception step is a repetitive packet, which is a packet to be repetitively transmitted by the information processing apparatus to the server apparatus;
a transmission determination step of determining whether the packet that is determined, at the packet determination step, to be a repetitive packet should be transmitted; and
a transmission step of transmitting a packet that is determined, at the packet determination step, to be a repetitive packet and a packet that is determined, at the transmission determination step, is to be transmitted, and not transmitting a packet that is determined, at the transmission determination step, is not to be transmitted.

It should be noted that in the above program at the transmission step of transmitting information and at the reception step of receiving information, the process performed only by hardware, e.g., the process performed by a modem and an interface card at the transmission step, is at least not included. Furthermore, this program may also be performed by being downloaded from a server, or a program recorded on a predetermined recording medium, such as an optical disk like a CD-ROM, etc., a magnetic disk or a semiconductor memory may be read and performed. In addition, a single computer or a plurality of computers may be employed to execute this program. That is, either the integrated processing or the distributed processing may be performed.

Moreover, the present invention is not limited to the above described embodiments, and can be variously modified, and these modifications can also be included within the scope of the present invention.

### <Industrial Applicability>

As described above, according to the packet processing apparatus, the communication system that includes this apparatus, and the packet processing method of the present invention, the processing load imposed on the server apparatus can be decreased by reducing the number of repetitive packets that are repetitively transmitted by the information processing apparatus to the server apparatus. Thus, this invention is useful for a system, etc., that includes an information processing apparatus that repetitively transmits packets and a server apparatus that receives the packets.

## Claims

1. A packet processing apparatus comprising:
a receiver for receiving a packet;
a packet determination unit for determining whether a packet received by the receiver is a repetitive packet that has been a packet repetitively transmitted by an information processing apparatus to a server apparatus;
a transmission determination unit for determining whether the packet that is determined by the packet determination unit to be a repetitive packet should be transmitted; and
a transmitter for transmitting a packet determined by the packet determination unit not to be a repetitive packet, and a packet that is determined, by the transmission determination unit, is to be transmitted, and for not transmitting a packet that is determined, by the transmission determination unit, is not to be transmitted.

2. The packet processing apparatus according to claim 1, wherein the transmission determination unit determines that, of repetitive packets, a predetermined proportion of repetitive packets are not to be transmitted.

3. The packet processing apparatus according to claim 2, which is present as one of relay nodes along a communication line between a communication processing apparatus, which performs a process related to communication with the information processing apparatus, and the server apparatus.

4. The packet processing apparatus according to claim 3, which is connected to the server apparatus either directly or indirectly.

5. The packet processing apparatus according to claim 1, wherein the transmission determination unit may determine that, of repetitive packets, repetitive packets that satisfy a predetermined condition are not to be transmitted.

6. The packet processing apparatus according to claim 5, wherein a repetitive packet includes:
first address information that is information related to an address of a transmission source designated a header of the repetitive packet; and
second address information that is information related to an address designated as a payload for the repetitive packet by the information processing apparatus,
wherein, in a case wherein the first address information and the second address information included in the repetitive packet match each other, the transmission determination unit determines that the repetitive packet is not to be transmitted to the server apparatus.

7. The packet processing apparatus according to claim 6, wherein the first address information included in the repetitive packet is set by a transmission processing apparatus, which includes an address translation function and via which the repetitive packet has been transmitted.

8. The packet processing apparatus according to claim 7, which is present as one of relay nodes along a communication line between a communication processing apparatus, which performs a process related to communication with the information processing apparatus, and the server apparatus.

9. The packet processing apparatus according to claim 8, which is connected to the server apparatus either directly or indirectly.

10. The packet processing apparatus according to claim 4, which is present as one of relay nodes along a communication line between a communication processing apparatus, which performs a process related to communication with the information processing apparatus, and the server apparatus.

11. The packet processing apparatus according to claim 10, which is connected to the server apparatus either directly or indirectly.

12. The packet processing apparatus according to claim 3, which is present as one of relay nodes along a communication line between a communication processing apparatus, which performs a process related to communication with the information processing apparatus, and the server apparatus.

13. The packet processing apparatus according to claim 12, which is connected to the server apparatus either directly or indirectly.

14. The packet processing apparatus according to claim 1, which is present as one of relay nodes along a communication line between a communication processing apparatus, which performs a process related to communication with the information processing apparatus, and the server apparatus.

15. The packet processing apparatus according to claim 14, which is connected to the server apparatus either directly or indirectly.

16. The communication system comprising:
a packet processing apparatus according to one of claims 1 to 15; and
a switching device for extracting, from packets exchanged along a communication line, only a packet transmitted to a server apparatus,
wherein a receiver of the packet processing apparatus receives the packet extracted by the switching device.

17. A packet processing method comprising:
a reception step of receiving a packet;
a packet determination step of determining whether the packet received at the reception step is a repetitive packet, which is a packet to be repetitively transmitted by an information processing apparatus to a server apparatus;
a transmission determination step of determining whether the packet that is determined, at the packet determination step, to be a repetitive packet should be transmitted; and
a transmission step of transmitting a packet that is determined, at the packet determination step, to be a repetitive packet and a packet that is determined, at the transmission determination step, is to be transmitted, and not transmitting a packet that is determined, at the transmission determination step, is not to be transmitted.

18. A program that permits a computer to perform:
a reception step of receiving a packet;
a packet determination step of determining whether the packet received at the reception step is a repetitive packet, which is a packet to be repetitively transmitted by an information processing apparatus to a server apparatus;
a transmission determination step of determining whether the packet that is determined, at the packet determination step, to be a repetitive packet should be transmitted; and
a transmission step of transmitting a packet that is determined, at the packet determination step, to be a repetitive packet and a packet that is determined, at the transmission determination step, is to be transmitted, and not transmitting a packet that is determined, at the transmission determination step, is not to be transmitted.
